(19) Europäisches Patentamt
European Patent Office
Office européen des brevets

(11) **EP 4 037 910 B1**

(12) **EUROPÄISCHE PATENTSCHRIFT**

(45) Veröffentlichungstag und Bekanntmachung des Hinweises auf die Patenterteilung:
**12.03.2025 Patentblatt 2025/11**

(21) Anmeldenummer: **20776159.4**

(22) Anmeldetag: **23.09.2020**

(51) Internationale Patentklassifikation (IPC):
**B42D 25/305** *(2014.01)* **B42D 25/351** *(2014.01)*
**B42D 25/455** *(2014.01)* **B42D 25/46** *(2014.01)*
**B42D 25/23** *(2014.01)* **B42D 25/29** *(2014.01)*
**G06Q 20/02** *(2012.01)* **G06Q 20/06** *(2012.01)*
**G06Q 20/22** *(2012.01)* **G06Q 20/38** *(2012.01)*

(52) Gemeinsame Patentklassifikation (CPC):
**B42D 25/23; B42D 25/29; B42D 25/305;
B42D 25/351; B42D 25/455; B42D 25/46;
G06Q 20/065; G06Q 20/341; G06Q 20/342;
G06Q 20/367; G06Q 20/3678; G06Q 20/3827;
G07F 7/0813**

(86) Internationale Anmeldenummer:
**PCT/EP2020/076514**

(87) Internationale Veröffentlichungsnummer:
**WO 2021/063763 (08.04.2021 Gazette 2021/14)**

(54) **KARTE UND VERFAHREN ZUR HERSTELLUNG DER KARTE**

CARD AND METHOD FOR PRODUCING THE CARD

CARTE ET SON PROCÉDÉ DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2019 DE 102019006799**

(43) Veröffentlichungstag der Anmeldung:
**10.08.2022 Patentblatt 2022/32**

(73) Patentinhaber: **Giesecke+Devrient advance52 GmbH
81677 München (DE)**

(72) Erfinder:
• **FABIAN, Cristina
85748 Garching (DE)**
• **SAUER, Thorsten
85435 Erding (DE)**
• **TARANTINO, Thomas
83410 Laufen (DE)**

(74) Vertreter: **Ter Meer Steinmeister & Partner Patentanwälte mbB
Nymphenburger Straße 4
80335 München (DE)**

(56) Entgegenhaltungen:
EP-A2- 0 542 298     WO-A1-2016/037895
WO-A1-2018/011108     US-B2- 7 363 265

**Beschreibung**

TECHNISCHES GEBIET DER ERFINDUNG

Die Erfindung betrifft eine Karte, insbesondere eine Chipkarte zur Übertragung von Geld bzw. geldwerten Beträgen in einem Zahlungsverkehr. Bevorzugt weist die Karte eine Recheneinheit zur Verwaltung von elektronischen Münzdatensätzen auf. Die Karte kann dabei unter anderem in Form eines Wertdokuments, eines Schecks, einer Kredit-, Identitäts- oder sonstigen Bezahlkarte, einer Ausweiskarte oder dergleichen ausgebildet sein. Die Erfindung betrifft zudem ein Verfahren zur Herstellung einer derartigen Karte.

TECHNISCHER HINTERGRUND DER ERFINDUNG

Es ist bekannt, sichtbare Daten als Information auf Karten anzuordnen, beispielsweise durch Druck, Prägen und dergleichen.

Karten unterschiedlichster Ausprägung sollen gegen Fälschung geschützt werden. In der Regel wird die Fälschungssicherheit von Karten durch die eingesetzten Hardware- und/oder Softwarekomponenten gewährleistet. Zur Sicherung von Karten gegen Fälschung werden aber auch Sicherheitselemente (als Sicherheitsmerkmale), deren Herstellung einen beträchtlichen technologischen Aufwand erfordert, eingesetzt. Ein Grund für die Beliebtheit derartiger Sicherheitselemente ist, dass die - beispielsweise durch Beugungs-, Brechungs-, Linsen- oder Mikrospiegelstrukturen - hervorgerufenen optischen Effekte auch durch modernste Kopiergeräte nicht reproduziert werden können, aber von einem Betrachter recht einfach geprüft werden können.

Das Vorhandensein eines derartigen Sicherheitselements mit den definierten optischen Effekten wird als Echtheitskriterium bewertet, d.h. vom Vorhandensein eines derartigen Sicherheitselementes wird auf die Echtheit der Karte geschlossen. In der EP 1 259 383 A1 und EP 2 344 342 A2 werden beispielsweise jeweils Karten beschrieben, in die ein Sicherheitselement eingebracht ist.

Bargeld in Form von Banknoten und Münzen ist ein konventionelles Zahlungsmittel. Dieses Zahlungsmittel wird von einer Zentralbank ausgegeben und auch dort wieder aussortiert (vernichtet). Bargeld ist ein zentral organisiertes gesetzliches Zahlungsmittel.

Zu den konventionellen Zahlungsmitteln gehört auch der bargeldlose Zahlungsverkehr durch Überweisung, Scheck, Wechsel oder Lastschrift (sogenanntes Buchgeld). Weitere Bargeldersatzmittel sind Kreditkarte, Guthabenkarte, Reisescheck. Vorausgesetzt wird dabei, dass diese einen Anspruch auf Geld verbriefenden Papiere sich als Zahlungsmittel in Umlauf befinden. Der Umlauf beginnt mit dem Begebungsvertrag und der damit verbundenen Übergabe der Urkunde vom Aussteller an den nächsten Inhaber. Dieses Buchgeld wird u.a. von Geldinstituten, bspw. Privat- oder Geschäftsbanken verwaltet, also zwischen Konten von Benutzern bargeldlos übertragen (=gebucht).

Seit einiger Zeit gibt es digitale Zahlungsmittel, ein sogenanntes virtuelles Zahlungsmittel, welches durch eine direkte Kommunikation, beispielsweise über ein Kommunikationsnetz wie das Internet oder aber auch über eine kontaktlose Nahfeldkommunikation (Karte - Terminal) oder aber eine kontaktbehaftete direkte Kommunikation (Karte - Terminal) von einem Zahlungspflichtigen an einen Zahlungsempfänger in Form von elektronischen Münzdatensätzen übertragen wird. Berühmte Vertreter dieser virtuellen Zahlungsmittel sind Kryptowährungen, wie Bitcoin, Ether, XRP, Litecoin und Tether, die zumeist dezentral organisiert sind, d.h. insbesondere ohne Geschäftsbanken oder Zentralbanken auskommen.

Nachteilig an den bisherigen Kryptowährungen ist ihre dezentrale Organisation und die damit einhergehende geringe Akzeptanz und Vertrauenswürdigkeit bei Kunden.

Daher wird in den deutschen Anmeldungen DE 10 2019 002 732 A1 und DE 10 2019 002 731 A1 ein innovatives digitales Zahlungsmittel dargestellt, in dem ein geldwerter Betrag in Form von elektronischen Münzdatensätzen zwischen Endgeräten übertragen werden kann. Diese elektronischen Münzdatensätzen werden von einer zentralen Instanz, einem Herausgeber oder dessen Systembetreiber, erhalten und auch dort wieder aussortiert (gelöscht bzw. vernichtet). Diese elektronischen Münzdatensätze können von einem Endgerät modifiziert, beispielsweise zwischen zwei Besitzern umgeschaltet, oder aufgeteilt oder zusammengesetzt werden. Zu jedem dieser elektronischen Münzdatensätze kann ein maskierter Münzdatensatz errechnet werden, der einzigartig und eindeutig dem (unmaskierten) elektronischen Münzdatensatz zugeordnet ist, um deren Echtheit und deren Besitzverhältnisse prüfen zu können. Das Maskieren des elektronischen Münzdatensatzes erfolgt bevorzugt durch eine Recheneinheit innerhalb des Endgeräts das auch den zumindest einen elektronische Münzdatensatz aufweist oder empfangen hat. Das beschriebene Endgerät kann beispielsweise auch eine Karte sein.

Dieses innovative digitale Zahlungsmittel wird zentral ausgegeben, beispielsweise von einer Zentralbank, die neben diesem innovativen digitalen zentral organisierten Zahlungsmittel auch Bargeld ausgibt. Ein solches innovatives digitales Zahlungsmittel kann alternativ jedoch auch zentral von einer Geschäftsbank im eigenen Namen ausgegeben werden.

Die Sicherheit solcher Systeme wird regelmäßig durch kryptographische Methoden, vorgegebene Zahlungsabläufe und teilweise auch durch Soft- und/oder Hardwaremaßnahmen im Endgerät erhöht. Beispielsweise werden sichere Prozessoren in Endgeräten reversibel eingesetzt oder fest eingebaut oder besonders abgesicherte Laufzeitumgebungen - neben den herkömmlichen Laufzeitumgebungen vorgesehen.

Es ist eine Aufgabe der hier vorliegenden Erfindung, ein besonders sicheres Endgerät für derartige digitale Zahlungsmittel bereitzustellen, welches also eine erhöhte Sicherheit, vorzugsweise für den Benutzer, bietet. Insbesondere soll, vorzugsweise für den Benutzer, auch die Echtheit des verwendeten Endgeräts geprüft werden können, um eine höhere Vertrauenswürdigkeit für digitale Zahlungsmittel zu schaffen.

Die US 7,363,265 B2 beschreibt ein Verfahren zur Erleichterung von Zahlungskartentransaktionen von einem zugrunde liegenden virtuellen Konto, das als Datenentität innerhalb eines Treuhandkontos existiert, wobei Karteninhaber in der Lage sind, Waren und Dienstleistungen von einem Händler zu kaufen. Der Karteninhaber kann eine Transaktion an jedem Ort ausführen, an dem derzeit eine Debitkarte zur Zahlung akzeptiert wird. Das Guthaben des Treuhandkontos muss nicht mit einem Girokonto oder Kreditkonto verknüpft sein, wodurch die Haftung des Karteninhabers, Kartenausstellers und Händlers reduziert werden kann. Vorzugsweise wird das virtuelle Konto anfänglich eingerichtet, wenn die Karte ausgestellt und aktiviert wird, und kann durch eine oder mehrere Transaktionen, für die die Karte als Zahlungsmittel oder Geldtransfer verwendet wird, aufgebraucht werden und kann von Zeit zu Zeit wieder aufgeladen werden durch Einzahlung zusätzlicher Gelder auf das Konto des virtuellen Karteninhabers oder Gutschrift des Saldos des virtuellen Kontos als Ergebnis einer Händlerrückerstattung, Anpassung oder Überweisung von einem anderen Karteninhaber.

Die EP 0 542 298 A2 beschreibt ein verbessertes Geldsystem, das elektronische Medien nutzt, um wirtschaftliche Werte sicher und zuverlässig auszutauschen. Die Erfindung stellt ein vollständiges Geldsystem mit elektronischem Geld bereit, das mit herkömmlichem Papiergeld austauschbar ist, umfassend (1) ausgebende Banken oder Finanzinstitute, die mit einer Geldgeneratorvorrichtung gekoppelt sind, um elektronische Währung zu erzeugen und an abonnierende Kunden auszugeben, die durch elektronische Kreditautorisierungen für Sichteinlagen gedeckt ist ; (2) Korrespondenzbanken, die elektronisches Geld annehmen und verteilen; (3) eine Vielzahl von Transaktionsgeräten, die von Teilnehmern zum Speichern von elektronischem Geld, zum Durchführen von Geldtransaktionen mit den Online-Systemen der teilnehmenden Banken oder zum Austauschen von elektronischem Geld mit anderen ähnlichen Transaktionsgeräten verwendet werden; (4) Geldautomaten, die mit der ausstellenden Bank und der Korrespondenzbank verbunden sind, zur Prozessabwicklung und zum Anschließen der Transaktionsgeräte an die ausgebende Bank und die Korrespondenzbank und zum Anschließen zwischen der ausgebenden Bank und der Korrespondenzbank selbst; und (5) eine Verrechnungsbank zum Ausgleichen der E-Geld-Konten der verschiedenen ausgebenden Banken (6).

Um erhöhten Ausschuss bei der Herstellung von Wert- oder Sicherheitsdokumenten (100), insbesondere Ausweisen, zu vermeiden und deren Integrität gegenüber Fälschungen und Fälschungen zu erhöhen, wird in der WO 2018/011108 A1 ein Verfahren zur Herstellung eines Wert- oder Sicherheitsprodukts (100) vorgeschlagen. Das Verfahren umfasst die folgenden Schritte: (a) Bereitstellen eines unbearbeiteten Produktelements (200) und mindestens eines Polymerfilms (300); (b) Bedrucken einer der Oberflächen (301) des mindestens einen Polymerfilms (300) mit mindestens einem gedruckten Bild (310); (c) Zusammenführen des unbearbeiteten Produktelements (200) und der mindestens einen Polymerfolie (300) zu einem Produktstapel (400), wobei die Oberfläche (301) der mindestens einen Polymerfolie (300) damit bedruckt ist wobei ein gedrucktes Bild (310) mit dem unbearbeiteten Produktelement (200) in Kontakt gebracht wird; und (d) Laminieren des Produktstapels (400), um eine unlösliche Anordnung aus dem unbearbeiteten Produktelement (200) und dem mindestens einen Polymerfilm (300) herzustellen.

Die WO 2016/037895 A1 beschreibt eine Banknote mit einem oder mehreren Sicherheitsmerkmalen und mindestens einem in die Banknote eingebetteten flexiblen gedruckten elektronischen (FPE) Element. Mindestens eines der Sicherheitsmerkmale und mindestens ein FPE-Element stehen miteinander in Beziehung.

ZUSAMMENFASSUNG DER ERFINDUNG

Die gestellte Aufgabe wird mit den Merkmalen der unabhängigen Patentansprüche gelöst. Weitere vorteilhafte Ausgestaltungen sind in den abhängigen Patentansprüchen beschrieben.

Die Aufgabe wird insbesondere durch eine in Anspruch 1 definierte Karte, insbesondere eine Chipkarte, gelöst.

Die Karte weist eine Recheneinheit zur Verwaltung von elektronischen Münzdatensätzen, wobei die elektronischen Münzdatensätze von einer zentralen Instanz ausgegeben werden, und ein Kartenkörper mit sichtbaren Daten und zumindest einem sichtbaren Merkmal auf. Die zentrale Instanz ist zugleich Herausgeber einer Banknotenserie und das zumindest eine sichtbare Merkmal weist die Karte für einen Betrachter als Teil der Banknotenserie aus.

Eine Chipkarte, oft auch als Smartcard oder (Universal) Integrated Circuit Card ((U)ICC) bezeichnet, ist eine Karte mit Kartenkörper und eingebautem integrierten Schaltkreis, auch "Chip" genannt, der nichtflüchtige Speicher und einen Mikroprozessor (=Recheneinheit) enthalten kann.

Durch das Einbringen eines sichtbaren Merkmals, das Teil einer Banknotenserie ist, in den Kartenkörper, wird eine Zugehörigkeit des digitalen Zahlungsmittel zu dem konventionellen Zahlungsmittel (Banknotenserie) angezeigt.

Dem Betrachter wird sofort bewusst, dass die Karte als Zahlungsmittel für den Herausgeber der Banknotenserie ebenso sicher ist. Damit wird die Reputation des Herausgebers der Banknotenserie auch auf diese digitalen Zahlungsmittel - hier durch das Verwalten der elektronischen Münzdatensätze mittels der Karte - übertragen und die Benutzerakzeptanz für derartige digitale Zahlungsmittel wird erhöht.

Durch das Verwenden eines sichtbaren Merkmals, dass bevorzugt auch als sichtbares Merkmal in einer Banknotenserie verwendet wird, wird eine Echtheit der Karte viel leichter verifizierbar, denn der Betrachter erkennt das sichtbare Merkmal wieder, das auch auf konventionellen Zahlungsmitteln verwendet wird. Eine Echtheitsprüfung ist dem Benutzer der Karte somit vertraut.

Bevorzugt umfasst der Kartenkörper zumindest eine papierartige Schicht bzw. Banknotensubstrat-Schicht. Der Begriff "papierartig" ist hier als Wirkungsangabe zu verstehen, so dass diese papierartige Schicht, wie Papier wirkt. Diese Schicht ist also aus einem flächigen Werkstoff, der im Wesentlichen aus Fasern pflanzlicher Herkunft besteht, die einen Faservlies bilden. Auch Papyrus, Tapa, Amatl und Huun - sogenannte Pseudopapiere - können die papierartige Schicht bilden. Anstelle von Baumwolle kann auch ein gebleichter Zellstoff als Basismaterial verwendet werden.

Bevorzugt ist die papierartige Schicht ein Banknotensubstrat, beispielsweise um eine Umweltverträglichkeit zu erhöhen oder um bestimmte Karteneigenschaften (Widerstandsfähigkeit, Alltagstauglichkeit, aber auch das Aufbringen von Sicherheitselementen) anzupassen. Banknotensubstrate weisen nämlich eine hohe Widerstandsfähigkeit für den alltäglichen Gebrauch auf, denn eine Banknote wird zwischen der Herstellung und der Aussonderung durch die Zentralbank von einem großen Personenkreis benutzt, häufig gefaltet, mehrmals unbeabsichtigt gewaschen, erhitzt, zusammengeknüllt, wieder geglättet und in Maschinen gezählt/geprüft/eingezahlt/ausgegeben. Um dieser Beanspruchung zu widerstehen, bestehen Banknotenpapiere aus einer besonderen Rohstoffzusammenstellung, die sich zu 90 % aus Baumwolle zusammensetzt. Das Banknotensubstrat kann alternativ auch ein gebleichter Zellstoff anstelle Baumwolle sein.

Bevorzugt wird die papierartige Schicht auf einem Fertigungsbogen bereitgestellt und ist zunächst komplett fertig gedruckt, d.h. Anwendungsprozesse wie Flach-, Durch-, Tief- und Hochdruck, Offset, Siebdruck, Intaglio und Zifferung wurden auf dem Bogen bereits angewendet.

Bevorzugt wird der Bogen beidseitig mit einer Folie kaschiert. Unter Kaschieren versteht man das Verbinden mehrerer Lagen gleicher oder verschiedener Materialien (teilweise Folien) mit Hilfe geeigneter Kaschiermittel (Lack, Leim, Wachs). Kaschiert wird, um die papierartige Schicht zu schützen und/oder zu dekorieren und/oder eine Addierung günstiger Materialeigenschaften zu erzielen, indem das Material auf oder unter eine Schicht mit den gewünschten Eigenschaften aufgetragen oder zwischen zwei Schichten eingebracht wird.

Weiterhin bevorzugt besteht die papierartige Schicht aus einer Kombination aus mindestens zwei übereinander angeordneten und miteinander verbundenen unterschiedlichen Substraten, einem sogenannten Hybrid. Hierbei besteht die papierartige Schicht beispielsweise aus einer Kombination Kunststofffolie-Papier-Kunststofffolie, d.h. ein Substrat aus Papier wird auf jeder seiner beiden Seiten durch eine Kunststofffolie bedeckt, oder aus einer Kombination Papier-Kunststofffolie-Papier, d.h. ein Substrat aus einer Kunststofffolie wird auf jeder seiner beiden Seiten durch Papier bedeckt.

Karten, in denen ein derartiges Substrat bzw. Sicherheitspapier verwendet werden kann, sind insbesondere hochwertige Eintrittskarten, fälschungsgefährdete Ausweispapiere, wie Pässe und sonstige Ausweisdokumente, sowie Karten, wie beispielsweise Kredit- oder Debitkarten. Die Karte kann mit einer Haftschicht versehen werden, um als Produktsicherungselement, wie Etikett oder Siegel; zu dienen.

Auf der Karte können sichtbare Daten und das zumindest eine sichtbare Merkmal entsprechend der in der Banknotenherstellung üblichen Art und Weise in den Kartenkörper eingebracht bzw. an den Kartenkörper angebracht werden. Der Herstellungsprozess zum Anordnen der (sichtbaren Daten und) sichtbaren Merkmale gleicht dann einem entsprechenden Herstellungsprozess einer Banknote, wodurch eine Vereinfachung der Produktion der Karte erreicht ist.

Bevorzugt umfasst der Kartenkörper zumindest eine Schicht aus laminierfähigem Kunststoff. Auf diese Weise können sichtbare Daten und das zumindest eine sichtbare Merkmal entsprechend der in der Kartenherstellung üblichen Art und Weise in den Kartenkörper eingebracht bzw. an den Kartenkörper angebracht werden. Der Herstellungsprozess zum Anordnen der sichtbaren Daten und sichtbaren Merkmale gleicht dann einem entsprechenden Herstellungsprozess einer herkömmlichen Karte.

Weiter bevorzugt umfasst der Kartenkörper mehrere Schichten, wobei die sichtbaren Daten und das zumindest eine sichtbare Merkmal auf oder in unterschiedlichen Schichten des Kartenkörpers angeordnet sind. Die mehreren Schichten können vollständig aus laminierfähigem Kunststoff bestehen oder zumindest eine papierartige Schicht umfassen (sogenanntes Hybridsubstrat).

Bevorzugt ist die papierartige Schicht und/oder zumindest eine der Schichten des Kartenkörpers bedruckt, um insbesondere Informationen als sichtbare Daten aufzubringen.

Die sichtbaren Daten können eine Zahl, Buchstaben, Text und/oder sonstige Zeichen, wie Sonderzeichen oder Währungszeichen, umfassen. Keine sichtbaren Daten im vorliegenden Sinne sind dagegen beispielsweise Bilder oder rein graphische Elemente.

Die sichtbaren Daten und/oder die sichtbaren Merkmale können auf dem Kartenkörper (=Substrat) aufgebracht sein, beispielsweise durch Bedrucken, Prägung, Stanzung, etc.

Die sichtbaren Daten und/oder die sichtbaren Merkmale können in den Kartenkörper (=Substrat), beispielsweise durch Schichtaufbau des Kartenkörpers eingebracht sein.

Die sichtbaren Daten sind bevorzugt für den Betrachter lesbare Daten. Diese Daten können beispielsweise den Karteninhaber betreffen, also beispielsweise dessen Name in alphanumerischen Zeichenfolgen.

Alternativ oder zusätzlich sind die sichtbaren Daten beispielsweise Daten, die den Herausgeber der Karte betreffen, also beispielsweise dessen Name, dessen Identifikationsnummer, etc. Weiter alternativ oder zusätzlich sind die sichtbaren Daten beispielsweise Daten, die die zentrale Instanz betreffen, also beispielsweise dessen Name, das Land, die Währung als Text. Die sichtbaren Daten können also eine Währungsangabe der Banknotenserie umfassen. Zusätzlich zu den lesbaren sichtbaren Daten kann ein sichtbares Symbol, beispielsweise eine Flagge, vorliegen.

Das zumindest eine sichtbare Merkmal ist bevorzugt ein Sicherheitsmerkmal, das insbesondere ein in den Kartenkörper integriertes Sicherheitsmerkmal ist. Damit erhält der Kartenkörper ein Sicherheitsmerkmal, welches auch auf Banknoten der Banknotenserie enthalten ist. Eine reine Information (sichtbarer Daten) ist kein sichtbares Merkmal im vorliegenden Sinne.

Die zentrale Instanz ist eine Instanz, die für die Herausgabe von elektronischen Münzdatensätzen verantwortlich bzw. zuständig ist. Eine zusätzliche Verwalterinstanz, wie Geschäftsbank und/oder Systembetreiber, ist eingerichtet und/oder von der zentralen Instanz zugelassen, die elektronischen Münzdatensätzen zu verwalten. Nur optional kann die zentrale Instanz zusätzlich auch die Verwaltung der elektronischen Münzdatensätze ganz oder teilweise mit übernehmen. Erfindungsgemäß ist diese zentrale Instanz zugleich auch Herausgeber von einer Banknotenserie. Somit kann beispielsweise eine Zentralbank eine zentrale Instanz sein. Die Zentralbank als Herausgeber der Banknotenserie kann auch Herausgeber der erfindungsgemäßen Karte zur lokalen Verwaltung von elektronischen Münzdatensätzen sein. Bevorzugt ist der Herausgeber der erfindungsgemäßen Karte eine Geschäftsbank oder die zusätzliche Verwaltungsinstanz, wie der Systembetreiber. Erfindungsgemäß ist sichergestellt, dass ein Betrachter der Karte die auf der Banknotenserie verwendeten sichtbaren Merkmale auch auf der Karte wiederfindet und so die Karte einfach auf Echtheit verifizieren kann.

In einer bevorzugten Ausgestaltung ist eine Banknotenserie eine Serie von Banknoten mit unterschiedlichen Grundwerten. Eine Banknote ist dabei eine Urkunde, die in einem bestimmten Land oder Währungsraum als gesetzliches Zahlungsmittel dient und von einer autorisierten Institution, hier der zentralen Instanz (Notenbank, Zentralbank) ausgegeben wird und auf einen runden Nominalwert als Grundwert einer Währungseinheit lautet. Die auf den Banknoten verwendeten Sicherheitsmerkmale entsprechen bevorzugt dem zumindest einen sichtbaren Merkmal der Karte.

Bevorzugt ist das zumindest eine sichtbare Merkmal ein Serienmerkmal. Dabei ist das Serienmerkmal ein in der Banknotenserie durchgehend verwendetes technisch einheitliches Merkmal in der Banknotenserie, beispielsweise ein Hologramme, eine Folie, ein Streifen mit optisch variablen oder schwebenden Motiv, etc.

Bevorzugt ist das zumindest eine sichtbare Merkmal ein Serienmerkmal. Dabei ist das Serienmerkmal ein in der Banknotenserie durchgehend verwendetes optisch einheitliches Merkmal in der Banknotenserie, beispielsweise ein Schriftzug (ggf. der sichtbaren Daten) immer in einer spezifischen Schriftart oder ein Land der zentralen Instanz als Landkarte. Ein Währungssymbol könnte immer in einem spezifischen Design dargestellt sein. Ein Name als sichtbares Datum könnte immer in einem spezifischen Design dargestellt sein.

Das zumindest eine sichtbare Merkmal ist ein Serienmerkmal und das Serienmerkmal ist eine in der Banknotenserie durchgehend verwendete Metainformation. Beispielsweise könnte ein Grundwert der Banknotenserie oder ein Digital-Symbol stets an der gleichen Position oder an mehreren Positionen der Karte angeordnet sein. Die immergleiche Position stellt dann die Metainformation dar, die auch auf der Banknotenserie verwendet wird.

Bevorzugt ist das zumindest eine sichtbare Merkmal ein Serienmerkmal und das Serienmerkmal ist ein in der Banknotenserie durchgehend verwendetes Muster. Hierbei wird beispielsweise die Gestaltung einer Banknote auch auf die Karte appliziert, um einem Betrachter ein gewohntes und bekanntes Muster zu geben, das er bereits vom Muster der Banknotenserie her kennt.

Das zumindest eine sichtbare Merkmal ist alternativ ein eigenständiges Serienmerkmal für die erfindungsgemäße Karte. Somit wird in Abgrenzung zur Banknotenserie ein weiteres sichtbares Merkmal geschaffen und im Kartenkörper integriert.

Weiter bevorzugt ist das sichtbare Merkmal ein aus einer Sammlung bestehender Serienmerkmale aus der Banknotenserien. Hierbei werden etablierte und von der zentralen Instanz für Banknotenserien bereits verwendete Sicherheitsmerkmale auch für die Karte verwendet.

In einer bevorzugten Ausgestaltung ist der Kartenkörper mehrschichtig ausgebildet und das zumindest eine sichtbare Merkmal ist auf einer innenliegenden Schicht des Kartenkörpers angeordnet.

In einer bevorzugten Ausgestaltung sind die sichtbaren Daten auf einer innenliegenden Schicht des Kartenkörpers angeordnet. Damit diese sichtbaren Daten für den Betrachter erkannt werden können, werden transparente Deckschichten als Laminier-Schichten verwendet.

In einer bevorzugten Ausgestaltung ist der Kartenkörper mehrschichtig ausgebildet und eine innenliegende Schicht des Kartenkörpers ist eine Banknote. Die Karte ist dann bevorzugt mit mehr als zwei, insbesondere allen, Sicherheitsmerkmalen der Banknotenserie ausgestattet, und umfasst beispielsweise eines oder mehrere der folgenden sichtbaren Merkmale einer Banknote, nämlich: Wasserzeichen, Sicherheitsfaden, Sicherheitspatch, Fenstermerkmal, Durchsichtsmerkmal, Aufsichtsmerkmal, Hologramm, Kinegramm, optisch variable Druckfarbe, Guillochen und dergleichen mehr. Das (oder die) Sicherheitsmerkmal(e) kann ein Sicherheitselement sein. Als Sicherheitselemente werden insbesondere Elemente bezeichnet, die separat hergestellt und dann auf Banknotensubstratschichten transferiert oder laminiert werden oder in die Banknotensubstratschicht integriert werden. Sicherheitselemente sind beispielsweise Sicherheitsfaden, Sicherheitspatch oder Sicherheitsstreifen, die - jeweils mit oder ohne eigenen Träger - auf oder in der Banknotensubstratschicht vorliegen.

In einer bevorzugten Ausgestaltung sind die Abmessungen (=Format) der Banknote an das Format der Karte angepasst. Bevorzugt ist die Banknote in ihren Abmessungen kleiner als die Karte. Als Kartenformat ist beispielsweise eines der Formate für Identitätsdokumente, insbesondere das ID-1, das ID-2, das ID-3 und/oder das ID-000 gemäß technischer Spezifikation ISO/IEC 7810 oder aber auch ein kartenherausgebereigenes Format, wie bspw. das Visa-Mini-Format ausgewählt. Die in diese Karte eingebrachte Banknote hat sodann ein Format welches kleiner als dieses gewählte Kartenformat. Beispielsweise entspricht die Abmessung der Banknote 90-95% der Abmessung der Karte, bevorzugt 75-95%, mehr bevorzugt 50-95%.

In einer bevorzugten Ausgestaltung ist ein Inhaber der Karte in dem System zur Verwaltung und Übertragung der elektronischen Münzdatensätze - also insbesondere bei der zentralen Instanz bzw. bei der zusätzlichen Verwaltungsinstanz, wie Geschäftsbank oder Systembetreiber, anonym und/oder pseudonym registriert. Auf diese Weise bleiben die Vorzüge des innovativen digitalen Zahlungsmittels (Verwaltung und Übertragung der elektronischen Münzdatensätze), insbesondere die Anonymität der Teilnehmer und damit die Nichtverfolgung der Zahlungsaktionen, erhalten.

In einer bevorzugten Ausgestaltung ist ein Inhaber der Karte namentlich bekannt, also bei der zentralen Instanz bzw. bei der zusätzlichen Verwaltungsinstanz. Bevorzugt hat der Inhaber der Karte bei der zusätzlichen Verwaltungsinstanz (oder der zentralen Instanz) ein Konto. Das Konto kann optional neben dem innovativen digitalen Zahlungsmittel (Verwaltung und Übertragung der elektronischen Münzdatensätze) auch für konventionelle Transaktionen, wie Überweisungen, verwendet werden. Bevorzugt ist dann ein Herausgeber der Karte eine Geschäftsbank.

Bevorzugt weist die Karte eine elektronische Anzeigeeinheit auf, die insbesondere eingerichtet ist zur Anzeige von geldwerten Beträgen elektronischer Münzdatensätze, die beispielsweise in der Karte verwaltet werden und/oder Teil einer aktuellen Transaktion sind. Damit kann dem Inhaber der Karte der geldwerte Betrag (oder die geldwerten Beträge) der elektronischen Münzdatensätze, die auf der Karte abgelegt und übertragbar sind, direkt angezeigt werden.

Bevorzugt weist die Karte eine Eingabeeinheit für Benutzereingaben auf. Die Eingabeeinheit kann beispielsweise eine oder mehrere, vorzugsweise zwei bis vier, Tasten und/oder einen (Fingerabdruck-)Sensor umfassen. Mit Hilfe der Eingabeeinheit kann der Inhaber beispielsweise eine Auswahl treffen, Daten eingeben und/oder die Übertragung von elektronischen Münzdatensätzen freigeben.

Als Schnittstelleneinheit - zum Austausch von elektronischen Münzdatensätzen - wird die Karte bevorzugt eine Nahfeld-Kommunikations-Schnittstelle (NFC, RFID) und/oder eine kontaktbehaftete Schnittstelle (ISO 7816, USB, SWP) umfassen. Über diese Schnittstelle können elektronische Münzdatensätze auf die Karte geladen und/oder von der Karte entnommen werden. Dies wird nachfolgend auch als Übertragen von elektronischen Münzdatensätzen bezeichnet.

Die Karte umfasst zumindest ein sichtbares Merkmal, es ist bevorzugt eine Mehrzahl von sichtbaren Merkmalen vorzusehen. Je größer die Anzahl an sichtbaren Merkmalen, desto größer ist die Fälschungssicherheit.

Das zumindest eine sichtbare Merkmal ist bevorzugt ein grundlegendes Sicherheitsmerkmal (sogenanntes Level 1 Merkmal), welches vom Betrachter der Karte direkt erkannt und ohne weitere Hilfsmittel - also vom unbewaffneten Auge des Betrachters - überprüft/verifiziert werden kann. Folgende Beispiele für sichtbare Merkmale für eine Karte sind denkbar, die nachfolgende Auflistung ist nicht beschränkend zu lesen:
Ein Wasserzeichen als sichtbares Merkmal wird bei der Herstellung einer papierartigen Schicht eingearbeitet. In diesem Fall ist im Kartenkörper zumindest eine papierartige Schicht vorgesehen.

Ein Durchsicht-Fenster als weiteres Beispiel für ein sichtbares Merkmal ist ein in polymersubstratbasierten Banknoten durch lokales Weglassen einer Beschichtung zur Farbannahme oder bei papierbasierten Banknoten durch im Papiersubstrat ausgestanzten Löcher und überkleben mit Folienelementen eingebrachtes Fenster. Bevorzugt werden Durchsicht-Register und Passerdruck mit einem ergänzenden Muster auf Vorder- und Rückseite der Folienschichten, die erst im Gegenlicht das Gesamtbild ergeben, als sichtbare Merkmale eingesetzt, um die Fälschungssicherheit zu erhöhen. Dabei wird beispielsweise ein Hybridbanknotensubstrat eingesetzt.

Als sichtbares Merkmal kann auch ein Transfer- und/oder Folienelement verwendet werden, in dem optische, schwer reproduzierbare Oberflächenmarkierung eingearbeitet sind. Derartige Transfer- und/oder Folienelemente sind beispielsweise Kinegramme oder Hologramme, die drucktechnisch durch Muster auf Metall- oder Kunststofffolien hergestellt werden.

Als sichtbare Merkmale können auch Guillochen, Irisdruck, Anti-Kopier-Raster, Melierfasern, Mikro-Perforation, Mikro-Schrift, Perlglanzstreifen, und/oder optisch variable Druckfarben eingesetzt werden.

Insbesondere werden Sicherheitsfäden, Sicherheitsstreifen oder Sicherheitspatch und Effektfarben als sichtbare Merkmale eingesetzt.

Der Kartenkörper umfasst beispielsweise zwei Laminier-Schichten. Hier werden bevorzugt dünne, folienartige kunststoffbasierte Schichten als Laminier-Schicht verwendet. Jede der Laminier-Schichten weist bevorzugt eine mittels Klebemittel benetzte Oberseite auf. Bevorzugt wird neben dem Laminieren auch ein Kaschieren angewendet, um die Karte herzustellen. Befindet sich die papierartige Schicht zwischen den beiden Laminier-Schichten, so ist das Klebemittel auf der jeweils der papierartigen Schicht zu gewandten Oberseite der Laminier-Schicht angeordnet.

Die Karte kann in einem Laminier-Verfahren (Lamination) hergestellt werden. Beispielsweise kann ein beim Laminieren verwendetes Klebemittel die Oberfläche des Banknotensubstrats verbessern benetzen und so eine Haftkraft beim Fügeverfahren (Laminieren) vergrößern. Eine Auftrennung der einzelnen Schichten der laminierten Karte wird so erschwert oder gar verhindert.

In einer bevorzugten Ausgestaltung sind zwei papierartige Schichten als Banknotensubstrat mit einer innenliegenden Folienschicht vorgesehen, wobei die Folienschicht auf beiden Oberseiten eine Klebebeschichtung aufweist. Diese Folienschicht verstärkt den Aufbau der Karte und erhöht die Widerstandskraft weiter. Bevorzugt ist diese Folienschicht mit einer Antennenwicklung versehen. Beispielsweise sind Leiterbahnen als Antennenwicklungen auf diese Folienschicht aufgedruckt. Diese Antennenwicklung kann mit einem Halbleiterchip (der Recheneinheit) der Karte elektrisch leitend verbunden werden, um eine Nahfeldkommunikationsschnittstelle, beispielsweise NFC oder RFID, auszubilden. Der Halbleiterchip ist beispielsweise in eine Kavität des Banknotensubstrats integriert oder auf einer zusätzlichen Schicht der Karte eingebracht. Auf diese Weise kann die Funktionalität der Karte weiter erhöht werden.

In einer bevorzugten Ausgestaltung sind zwei papierartige Schichten als Banknotensubstrat mit einer innenliegenden Folienschicht in dem Kartenkörper vorgesehen, wobei die Folienschicht auf beiden Oberseiten eine Klebebeschichtung aufweist. Diese Folienschicht verstärkt den Aufbau der Karte und erhöht die Widerstandskraft weiter. Zudem ermöglicht diese Folienschicht das Einbringen von Fenstern, die ggf. für Sicherheitselemente verwendet werden.

In einer bevorzugten Ausgestaltung ist zumindest eine transparente Laminier-Schicht zwischen den zwei papierartigen Schichten angeordnet. Weiter bevorzugt sind zwei papierartige Schichten an den Außenseiten der laminierten Karte angeordnet.

In einer bevorzugten Ausgestaltung weist die papierartige Schicht auf der Oberseite einen Flächeninhalt auf, der geringer ist als der Flächeninhalt der Karte. Mit anderen Worten, die papierartige Schicht ist kleiner als die fertige laminierte Karte. Somit ist die papierartige Schicht vollständig zwischen den beiden Laminier-Schichten integriert. Die zwei transparenten Laminier-Schichten erzeugen um die papierartige Schicht herum einen transparenten Rand.

In einem weiteren Aspekt der Erfindung wird die Aufgabe durch ein in Anspruch 14 definiertes Verfahren zur Herstellung einer Karte der vorhergehend beschriebenen Art mit den folgenden Verfahrensschritten gelöst: Bereitstellen eines Kartenkörpers mit sichtbaren Daten und zumindest einem sichtbaren Merkmal; und Herausgeben der Karte durch eine zentrale Instanz, wobei die zentrale Instanz zugleich Herausgeber oder Verwalter einer Banknotenserie ist und wobei das zumindest eine sichtbare Merkmal die Karte für einen Betrachter als Teil der Banknotenserie ausweist.

Bevorzugt ist der Kartenkörper mehrschichtig aufgebaut, wobei die einzelnen Schichten passergenau übereinander angeordnet sind und mittels Druck und Temperatur verbunden werden. Dieses Verbinden erfolgt bevorzugt mittels eines Laminier-Schritts, ggf. in Verbindung mit einem Kaschier-Schritt.

Schichten der Karte werden bevorzugt passergenau angeordnet. Als Passer oder Register im Sinne dieser Erfindung wird die Lagegenauigkeit von Druckbildern oder anderen Elementen zueinander auf Vorder- und/ oder Rückseite des Banknotensubstrats bezeichnet. Beispielsweise stören bei Teilen von Druckbildern, die sich in Durchsicht zu einem Gesamtdruckbild ergänzen, bereits geringe Abweichungen von weniger als 0,1 mm zwischen den jeweiligen Druckbildern den visuellen Eindruck in Durchsicht erheblich. Die DIN 16500-2: 1987-01 definiert als Passer die Genauigkeit in der Drucktechnik, mit der die vorgesehene Wiedergabegüte der zu reproduzierenden Details erreicht bzw. eingehalten wird. Die Begriffe "Vorderseite" oder "Rückseite" des Substrats oder Karte sind relative Begriffe, die auch als "die eine" und "die gegenüberliegende" Seite bezeichnet werden können und die den überwiegenden Anteil der Gesamtoberfläche des Substrats oder der Karte bilden. Ausdrücklich nicht umfasst mit diesen Begriffen sind die Seitenflächen eines Substrats oder Karte, die bei einer Dicke eines Substrats oder Karte, die bei Kartenkörpern nur etwa einen Millimeter oder bei Banknotensubstraten nur Bruchteile eines Millimeters beträgt, verschwindend gering sind und üblicherweise nicht mit Sicherheitselementen oder Beschichtungen versehen werden bzw. werden können. Insbesondere können mit den Seitenflächen auch keine Durchsichteffekte erzielt werden.

Dabei können in zumindest eine papierartige Schicht des Kartenkörpers Aussparungen eingebracht werden durch welche eine darüber und darunter liegende Folienschicht in direkten Kontakt miteinander stehen, um sich beim Laminieren direkt miteinander zu verbinden.

Dazu erfolgt bevorzugt das Auftragen eines Klebers auf die Folienschichten und das Laminieren der Schichten durch Aufbringen von Druck und Temperatur.

Das Einbringen von Aussparungen in die mindestens eine papierartige Schicht erfolgt bevorzugt durch Schneiden, Laserschneiden, Stanzen oder ähnliche Fertigungsschritte.

EP 4 037 910 B1

KURZE ZUSAMMENFASSUNG DER FIGUREN

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:

Fig.1 ein Ausführungsbeispiel einer schematisch dargestellten erfindungsgemäßen Karte im Querschnitt;

Fig.2 ein weiteres Ausführungsbeispiel einer schematisch dargestellten erfindungsgemäßen Karte im Querschnitt;

Fig.3 ein weiteres Ausführungsbeispiel einer schematisch dargestellten erfindungsgemäßen Karte im Querschnitt;

Fig.4 ein Ausführungsbeispiel einer schematisch dargestellten erfindungsgemäßen Karte in Draufsicht;

Fig.5 ein Ausführungsbeispiel eines Zahlungssystems zum Austauschen von elektronischen Münzdatensätzen unter Verwendung der erfindungsgemäßen Karte; und

Fig.6 ein weiteres Ausführungsbeispiel einer schematisch dargestellten erfindungsgemäßen Karte in Draufsicht.

FIGURENBESCHREIBUNG

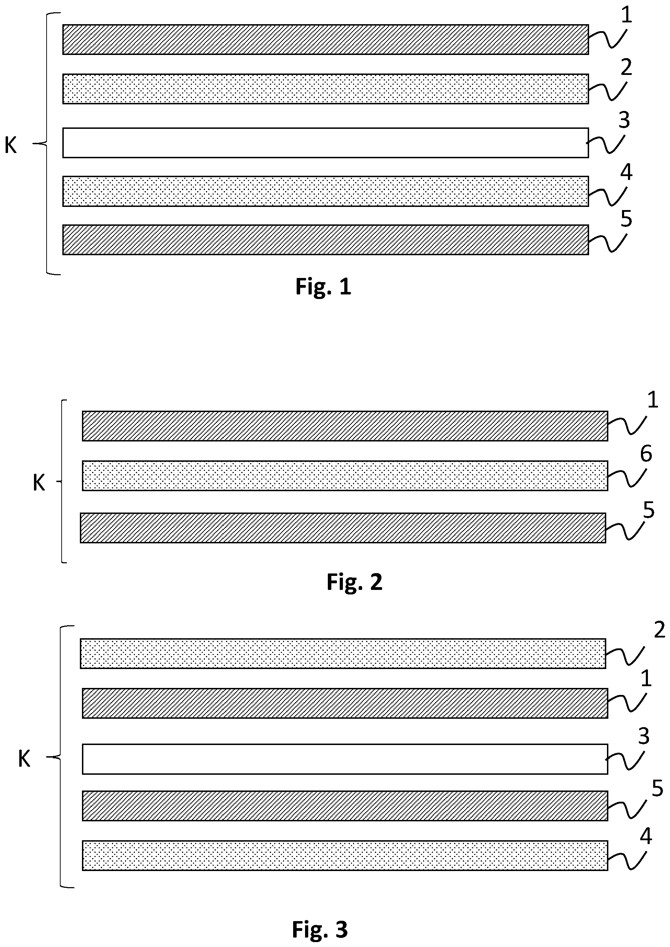

Fig.1 zeigt einen Schichtaufbau für eine erfindungsgemäße laminierte Karte K. Dabei wird eine Folienschicht 3 bereitgestellt. Die Folienschicht 3 wird mit einer Antennenwicklung versehen, um im Einsatz der laminierten Karte eine Nahfeldkommunikation zu ermöglichen. Alternativ oder zusätzlich zur Folienschicht 3 kann ein Folienverbund (nicht dargestellt) vorgesehen sein, der einen Halbleiterchip aufweist, mit dem die Antennenwicklung der Folienschicht 3 elektrisch leitend verbindbar ist, um eine Nahfeldkommunikationsschnittstelle bereitzustellen.

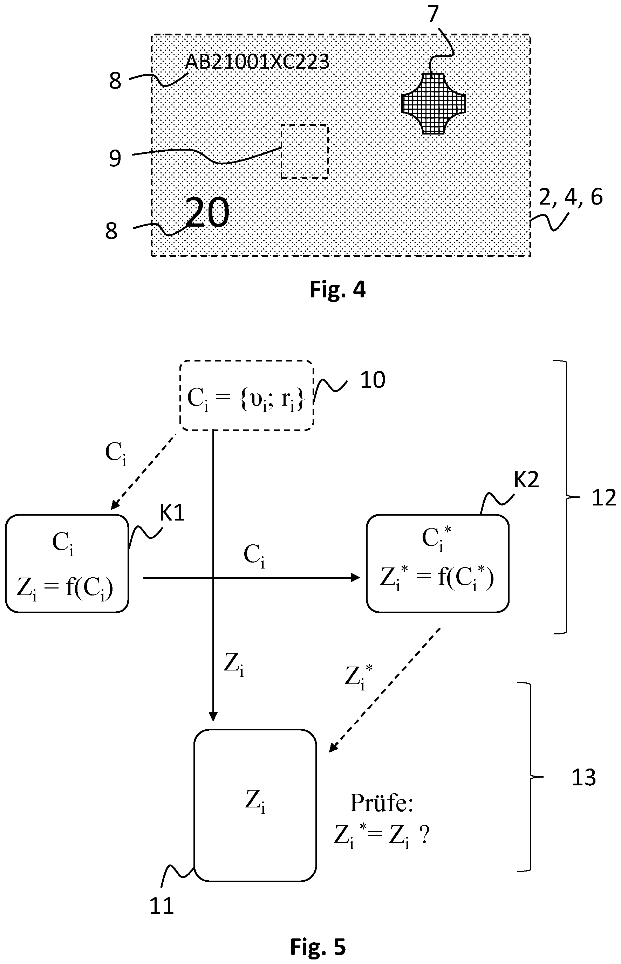

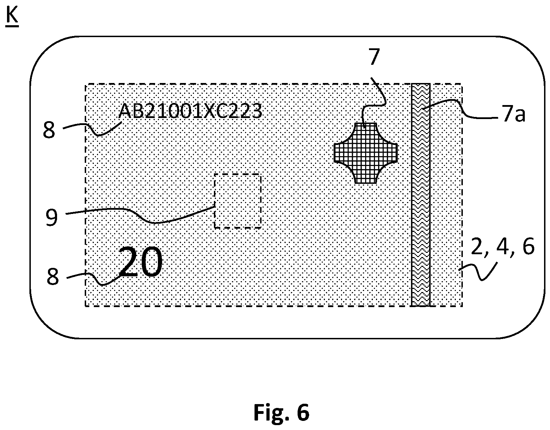

Die Folienschicht 3 ist auf beiden flächigen Oberseiten (also beidseitig) mit einem geeigneten Klebemittel benetzt. Auf jede der beiden Oberseiten der Folienschicht 3 wird ein Banknotensubstrat 2, 4 angeordnet. Dieses Banknotensubstrat 2, 4 ist eine papierartige Schicht und weist sichtbare Merkmale, wie beispielsweise Sicherheitsfaden, Sicherheitsstreifen, Hologramme, Kinegramme, Wasserzeichen, etc. auf, siehe Fig. 4 und 6 für weitere Erläuterungen. Das Banknotensubstrat 2, 4 kann zudem sichtbare Daten aufweisen, die beispielsweise gedruckt sein, beispielsweise zur visuellen Darstellung einer Seriennummer, eines Kartenbesitzernamens, eines Bankinstituts und dergleichen.

Auf der der Folienschicht 3 abgewandten Oberseite des Banknotensubstrats wird jeweils eine oder mehrere Laminier-Schichten 1, 5 angeordnet. Diese Laminier-Schichten 1, 5 weisen dazu vorzugsweise ein geeignetes Klebemittel auf der der Oberseite des Banknotensubstrats zugewandten Oberseite auf. Die Laminier-Schichten 1, 5 sind transparent. Die Laminier-Schichten 1, 5 können bedruckt sein, um weitere Informationen oder sichtbare Daten darzustellen.

Bevorzugt besteht die papierartige Schicht 2, 4, 6 aus einer Kombination aus mindestens zwei übereinander angeordneten und miteinander verbundenen unterschiedlichen Substraten, einem sogenannten Hybrid. Hierbei besteht die papierartige Schicht beispielsweise aus einer Kombination Kunststofffolie-Papier-Kunststofffolie, d.h. ein Substrat aus Papier wird auf jeder seiner beiden Seiten durch eine Kunststofffolie bedeckt, oder aus einer Kombination Papier-Kunststofffolie-Papier, d.h. ein Substrat aus einer Kunststofffolie wird auf jeder seiner beiden Seiten durch Papier bedeckt. Angaben zum Gewicht des verwendeten Banknotensubstrats sind beispielsweise in der Schrift DE 102 43 653 A9 angegeben, deren Ausführungen diesbezüglich vollumfänglich in diese Anmeldung aufgenommen werden. Die Schrift DE 102 43 653 A9 führt insbesondere aus, dass die papierartige Schicht üblicherweise ein Gewicht von 50 g/m$^2$ bis 100 g/m$^2$ aufweist, vorzugsweise von 80 g/m$^2$ bis 90 g/m$^2$. Je nach Anwendung jedes andere geeignete Gewicht eingesetzt werden.

Karten K, in denen ein derartiges Substrat bzw. Sicherheitspapier verwendet werden kann, sind insbesondere hochwertige Eintrittskarten, fälschungsgefährdete Papiere, wie Pässe und sonstige Ausweisdokumente, sowie Karten, wie beispielsweise Kredit- oder Debitkarten, Produktsicherungselemente, wie Etiketten, Siegel, Verpackungen und dergleichen.

Die vereinfachte Benennung "Karte" schließt alle oben genannten Materialien, Dokumente und Produktsicherungsmittel ein.

In Fig. 2 ist ein zu Fig. 1 alternativer Aufbau einer laminierten Karte beschrieben. Hierbei ist eine einzige papierartige Schicht 6 zwischen zwei Laminier-Schichten 1, 5 eingebracht. Diese Laminier-Schichten 1, 5 weisen dazu vorzugsweise ein geeignetes Klebemittel auf der der Oberseite des Banknotensubstrats 6 zugewandten Oberseite auf.

8

Die Laminier-Schichten 1, 5 sind transparent. Die Laminier-Schichten 1, 5 können bedruckt sein, um weitere Informationen zu visualisieren.

Eine zu den Fig. 1 und 2 alternative Ausgestaltung einer laminierten Karte ist in Fig. 3 dargestellt. Hierbei ist die Folienschicht 3 zwischen zwei Laminier-Schichten 1, 5 angeordnet. Die Laminier-Schichten 1, 5 sind dazu beidseitig mit einem Klebemittel benetzt. An jeder der Folienschicht 3 abgewandten Oberseite der Laminier-Schichten 1, 5 ist jeweils eine papierartige Schichten 2, 4 angeordnet. Die in den Fig. 3 bis 6 gezeigten Ausgestaltungen zur Verbesserung der Lamination werden auch bei der Ausgestaltung der Fig. 7 angewendet.

Der in Fig. 1 bis Fig. 3 gezeigte Schichtaufbau wird laminiert. Dabei werden Druck und Glasübergangstemperaturen angewendet, um die Laminier-Schichten 1, 5 mit den Schichten 2, 3, 4, 6 zu fügen, sodass eine stoffschlüssige Verbindung entsteht.

Zum Erhöhen einer Widerstandskraft der Karte K können Aussparungen in die papierartigen Schichten 2, 4, 6 durch Stanzen, Lasern, Schneiden eingebracht werden, sodass ein Klebemittel während des Laminierens auch in die Aussparungen fließt und so die Haltekraft durch Oberflächenvergrößerung oder durch direktes Verbinden zweier Folienschichten 1, 3, 5 (falls die Aussparungen Durchlöcherungen der papierartigen Schicht sind).

Aufgrund dieser Aussparungen kann die Laminier-Schicht 1 mit der Laminierfolie 5 aufgrund der Temperatur- und Druckeinwirkung beim Laminieren auch in den Aussparungen platziert werden. Bevorzugt verbinden sich die beiden Laminier-Schichten 1, 5 innerhalb der Aussparung. Durch die entstehende stoffschlüssige Verbindung (Fügen) zwischen den Laminier-Schichten 1, 5 wird die mechanische Stabilität der Karte K wesentlich vergrößert und ein Risiko des Delaminierens (= Ab- bzw. Auftrennen des Schichtaufbaus) der Karte K aufgrund von äußeren Krafteinwirkungen oder sonstigen Umwelteinflüssen wird stark reduziert. Die Form der Aussparungen kann kreisrund, eckig, zackig, sternförmig oder zahnförmig sein. Die Aussparungen können um einen äußeren Rand des Substrats 2, 4, 6 umlaufend angeordnet sein und darüber hinaus können Aussparungen auf der gesamten Oberfläche der papierartigen Schichten 2, 4, 6 verteilt sein.

Der in Fig. 1 bis Fig. 3 gezeigte Schichtaufbau wird laminiert. Dabei werden Druck und Glasübergangstemperaturen an dem Schichtaufbau angewendet, um die Laminier-Schichten 1, 5 mit den übrigen Schichten 2, 3, 4, 6 zu fügen, sodass eine stoffschlüssige Verbindung entsteht. Das Verfahren kann als Heißlaminieren, Kaltlaminieren oder Laminieren zwischen Pressen durchgeführt werden.

Beim Heißlaminieren verschmilzt das bei Zimmertemperatur im festen Aggregatzustand befindliche Klebemittel der Folienschicht 3 oder Laminier-Schichten 1, 5 mit der papierartigen Schicht 2, 4, 6. Dazu wird die papierartige Schicht entsprechend Fig. 1 und 2 angeordnet und in einem Laminiergerät über heiße Rollen oder zwischen zwei Heizplatten hindurchgeführt, wodurch das Klebemittel in den zähflüssigen Aggregatzustand wechselt und so die Schichten 1, 3, 5 bei etwa 60°C bis 120 °C thermisch verbunden werden. Das Klebemittel wird auch in die Aussparungen (nicht gezeigt in Fig. 1 bis Fig. 3) der papierartigen Schicht 2, 4, 6 platziert und erhöht so die Haftkraft im Schichtaufbau.

Beim Laminieren zwischen Pressen durchläuft der in Fig. 1 und 2 gezeigte Schichtaufbau zuerst eine Heizpresse und anschließend eine Kühlpresse oder in einer Presse welche zuerst heizen und anschließend kühlen kann. In der Heizpresse werden die thermoplastischen Schichten unter hohen Temperaturen zusammengepresst. Bei Überschreitung der Glasübergangstemperatur verbinden sich die Folien 1, 3, 5 an ihren Grenzflächen mit den Schichten 2, 4, 6 und werden anschließend in einer Kühlpresse wiederum unter Druck abgekühlt, sodass sie sich zu einem Monoblock verschweißen. Dieses Verfahren wird bevorzugt bei der erfindungsgemäßen Karte eingesetzt.

In Fig. 4 ist eine papierartige Schicht 2, 4, 6 dargestellt, wie sie beispielsweise in der laminierten Karte K gemäß Fig. 1 bis 3 eingesetzt werden kann. Alternativ ist die Karte keine laminierte Schicht und der Kartenkörper ist nicht durch mehrere Schichten gebildet, sondern einstückig ausgebildet.

In Fig. 4 ist eine erfindungsgemäße Karte K gezeigt. Diese Karte K hat ein Substrat in Form einer Banknotenschicht 2, 4, 6 (=Substrat oder papierartige Schicht) gemäß der vorhergehend beschriebenen Art. Auf dem Substrat 2, 4, 6 sind sichtbare Daten 8 angeordnet. Diese sichtbaren Daten 8 sind beispielsweise der Nominalwert "20" einer Währung einer Banknotenserie, die der Herausgeber der Karte ebenfalls herausgibt oder verwaltet. Diese sichtbaren Daten 8 sind beispielsweise auch die Seriennummer "AB21001XC223" der Karte K. Die sichtbaren Daten 8 können auch ein "Land" der Währung/Herausgebers; eine "Währung" oder der Name des Herausgebers, beispielsweise der Name der Zentralbank sein. Darüber hinaus kann auch der "Name" des Karteninhabers (bzw. sein pseudonym) oder auch die Art der Karte angegeben sein.

Zudem sind zwei sichtbare Merkmale 7, 7a auf dem Substrat 2, 4, 6 dargestellt. Diese sichtbaren Merkmale 7 sind typische Sicherheitsmerkmale, also optisch variable Merkmale - wie Kippbilder, Hologramme, Kinegramme - ein Sicherheitsdruck - wie Guillochen oder Stichtiefdruck - ein Wasserzeichen, Aufsicht-/Durchsicht-Merkmale oder Vorderseiten-/Rückseiten-Merkmale, oder Transferelemente, wie Patches oder Streifen mit oder ohne eigenem Trägersubstrat. Das sichtbare Merkmal 7 kann auch als das Layout insgesamt bzw. das Format der Daten oder darin enthaltene Metainformationen angesehen werden, hier beispielsweise die Position des Grundwertes "20". Natürlich kann ein sichtbares Merkmal 7, 7a bzw. Sicherheitsmerkmal zusätzlich auch sichtbare Daten enthalten, beispielsweise der Sicherheitsstreifen Aussparungen in Form von Text. Die sichtbaren Daten sind dann jedoch eine zusätzliche Information.

So kann beispielsweise ein Text oder eine Zahl mit einer optisch variablen Druckfarbe gedruckt sein oder mit einem Mehrschichtaufbau beschichtet sein, der einen Aufsicht-/Durchsicht-Effekt zeigt, und somit ein sichtbares Merkmal 7 bzw. Sicherheitsmerkmal bilden.

Zusätzlich oder alternativ kann das sichtbare Merkmal 7a ein auf dem Substrat 2, 4, 6 oder in das Substrat 2, 4, 6 integriertes Sicherheitselement, beispielsweise ein Sicherheitsfaden oder ein Fensterfaden, sein.

Das sichtbare Merkmal 7 kann ein technisch einheitliches Merkmal der Banknotenserie sein, beispielsweise ein Hologramm, ein Kinegramm, ein Folienelement über einem Fenster oder ein Streifen mit optisch variablem/schwebenden Motiv. Oder, das sichtbare Merkmal 7 kann ein optisch einheitliches Merkmal der Banknotenserie sein, beispielsweise die Darstellung des "Landes" immer als Landkarte, oder das Währungssymbol in einem bestimmten Design oder die alphanumerischen Zeichen in einem bestimmten Design. Oder, das sichtbare Merkmal 7 kann eine Metainformation der Banknotenserie sein, beispielsweise die Positionierung des Grundwertes der Banknote an immer der gleichen Stelle der Karte K oder eine Person auf der Vorderseite und ein Gebäude auf der Rückseite der Karte K.

In Fig. 4 ist in gestrichelter Form eine Recheneinheit 9 in der Karte K angedeutet. Die Recheneinheit ist Teil eines Halbleiterchips (nicht dargestellt), der die Recheneinheit 9 und ggf. einen Speicher umfasst, um elektronische Münzdatensätze zu verwalten, beispielsweise zu empfangen, und/oder zu senden; und/oder zu modifizieren (umschalten, aufteilen, verbinden). Die Recheneinheit 9 kann ein Mikrokontroller bzw. Mikroprozessor sein. Nicht dargestellt sind Schnittstellen- oder Aus- bzw. Eingabeeinheiten der Karte K, mit deren Hilfe die elektronischen Münzdatensätze in die Karte K eingebracht/ausgegeben (übertragen), ggf. auch angezeigt oder sogar ausgewählt werden können. Die Karte K kann dazu auch betriebsbereit mit einem Terminal, bspw. Kassenautomat, Endgerät, etc., (nicht dargestellt) verbunden werden.

In Fig. 5 ist ein System zum Austausch von elektronischen Münzdatensätzen gemäß dem innovativen digitalen Zahlungssystem, so wie es in den deutschen

Patentanmeldungen DE102019002732 und DE102019002731 dargestellt ist, wie es mit erfindungsgemäßen Karten K als "Endgeräte" realisiert werden kann. Alle hier vorgeschlagenen Veränderungen/Modifikationen an einem elektronischen Münzdatensatz dienen dem Verwalten der elektronischen Münzdatensätze.

Dabei wird in einer Herausgeberinstanz 10, beispielsweise einer Zentralbank, ein elektronischer Münzdatensatz $C_i$ erzeugt. Die Zentralbank gibt zudem auch eine Banknotenserie heraus. Zu dem elektronischen Münzdatensatz $C_i$ wir ein maskierter elektronische Münzdatensatz $Z_i$ erzeugt, mit einem Verschleierungsbetrag versehen und in einem "verschleierten-elektronischen-Datensatz-Ledger" registriert. Als Ledger wird im Rahmen dieser Erfindung eine Liste, ein Verzeichnis, vorzugsweise eine Datenbankstruktur verstanden. Der elektronische Münzdatensatz $C_i$ wird auf eine erste Karte K1 übertragen. Die Karte K1 weist dazu eine - kontaktlose oder kontaktbehaftete - Schnittstelle auf.

Beispielsweise wurde dazu als Verschleierungsbetrag $r_i$ eine echte Zufallszahl erzeugt. Diese Verschleierungsbetrag $r_i$ wird mit einem monetären Betrag $v_i$ verknüpft und bildet sodann einen erfindungsgemäßen i-ten elektronischen Münzdatensatz:

$$C_i = \{v_i; r_i\} \qquad\qquad (1)$$

Ein gültiger elektronischer Münzdatensatz kann zur Bezahlung eingesetzt werden. Der Besitzer (Karteninhaber) der beiden Werte $v_i$ und $r_i$ ist daher im Besitz des digitalen Geldes als das innovative digitale Zahlungsmittel. Das digitale Geld ist aber definiert durch ein Paar bestehend aus einem gültigen elektronischen Münzdatensatz und einem entsprechenden maskierten elektronischen Münzdatensatz $Z_i$. Der maskierte elektronische Münzdatensatz $Z_i$ wird durch Anwenden einer homomorphen Einwegfunktion f ($C_i$) gemäß Gleichung (2) erhalten:

$$Z_i = f(C_i) \qquad\qquad (2)$$

Diese Funktion f ($C_i$) ist öffentlich, d.h. jeder Systemteilnehmer kann diese Funktion aufrufen und verwenden. Diese Funktion f ($C_i$) ist gemäß Gleichung (3) definiert:

$$Z_i = v_i \cdot H + r_i \cdot G \qquad\qquad (3)$$

wobei H und G Generatorpunkte einer Gruppe G, in der das diskrete Logarithmusproblem schwer ist, mit den Generatoren G und H, für die der diskrete Logarithmus der jeweils anderen Basis unbekannt ist. Beispielsweise sind G und H Generatorpunkte einer elliptischen Kurvenverschlüsselung, ECC, - also private Schlüssel der ECC, sind. Diese Generatorpunkte G und H müssen in der Art gewählt werden, dass der Zusammenhang von G und H nicht öffentlich bekannt ist, sodass bei:

$$G = n \cdot H \qquad\qquad (4)$$

die Verknüpfung n praktisch nicht auffindbar sein darf, um zu verhindern, dass der monetäre Betrag $\upsilon_i$ manipuliert wird und trotzdem ein gültiges $Z_i$ berechnet werden könnte. Die Gleichung (3) ist ein "Pederson-Commitment für ECC", das sicherstellt, dass der monetären Betrag $\upsilon_i$ einer Überwachungsinstanz 11 zugestanden, also "commited", werden kann, ohne diesen der Überwachungsinstanz 11 zu offenbaren. Der öffentlichen und entfernten Überwachungsinstanz 11 wird daher nur der maskierte Münzdatensatz $Z_i$ zugesendet (offenbart).

Auch wenn im vorliegenden Beispiel eine Verschlüsselung basierend auf elliptischen Kurven beschrieben ist bzw. wird, so wäre auch ein anderes kryptographische Verfahren denkbar, welches auf einem diskreten logarithmischen Verfahren beruht.

Die Gleichung (3) ermöglicht durch die Entropie des Verschleierungsbetrags $r_i$, dass auch bei kleinem Wertebereich für monetäre Beträge $\upsilon_i$ ein kryptografisch starkes $Z_i$ erhalten wird. Somit ist ein einfacher Brute-Force-Angriff durch bloßes Schätzen von monetäre Beträge $\upsilon_i$ praktisch nicht möglich.

Die Gleichung (3) ist eine Einwegfunktion, das heißt, dass die Berechnung von $Z_i$ aus $C_i$ einfach ist, da ein effizienter Algorithmus existiert, wohingegen die Berechnung von $C_i$ ausgehend von $Z_i$ sehr schwer ist, da kein in polynomialer Zeit lösbarer Algorithmus existiert.

Zudem ist die Gleichung (3) homomorph für Addition und Subtraktion, das heißt es gilt:

$$Z_i + Z_j = (\upsilon_i \cdot H + r_i \cdot G) + (\upsilon_j \cdot H + r_j \cdot G) = (\upsilon_i + \upsilon_j) \cdot H + (r_i + r_j) \cdot G \qquad (5)$$

Somit können Additions-Operationen und Subtraktions-Operationen sowohl in der Direkttransaktionsschicht 12 also auch parallel in der Buchhaltungsschicht 13 ausgeführt werden, ohne dass die Buchhaltungsschicht 13 Kenntnis von den elektronischen Münzdatensätzen $C_i$ hat. Die homomorphe Eigenschaft der Gleichung (3) ermöglicht eine Buchhaltung von gültigen und ungültigen elektronischen Münzdatensätzen $C_i$ auf alleiniger Basis der maskierten Münzdatensätze $Z_i$ zu führen und sicherzustellen, dass kein neuer monetärer Betrag $\upsilon_j$ geschaffen wurde.

Durch diese homomorphe Eigenschaft kann der Münzdatensatz $C_i$ gemäß Gleichung (1) aufgeteilt werden in:

$$C_i = C_j + C_k = \{\upsilon_j;\, r_j\} + \{\upsilon_k;\, r_k\} \qquad\qquad (6)$$

wobei gilt:

$$\upsilon_i = \upsilon_j + \upsilon_k \qquad\qquad (7)$$

$$r_i = r_j + r_k \qquad\qquad (8)$$

Für die entsprechenden maskierten Münzdatensätze gilt:

$$Z_i = Z_j + Z_k \qquad\qquad (9)$$

Mit Gleichung (9) kann beispielsweise auf einfache Weise eine "Aufteilen"-Verarbeitung bzw. ein "Aufteilen"-Verarbeitungsschritt eines elektronischen Münzdatensatzes geprüft werden, ohne dass die Überwachungsinstanz 11 Kenntnis von $C_i, C_j, C_k$ hat. Insbesondere wird die Bedingung der Gleichung (9) geprüft, um aufgeteilte Münzdatensätze $C_j$ und $C_k$ für gültig zu erklären und den Münzdatensatz $C_i$ für ungültig zu erklären.

Auf die gleiche Weise können elektronische Münzdatensätze auch zusammengefügt (verbunden) werden.

Zusätzlich gilt es zu prüfen, ob (nicht erlaubte) negative monetäre Beträge registriert werden. Ein Besitzer eines elektronischen Münzdatensatzes $C_i$ muss dabei der Überwachungsinstanz 11 nachweisen können, dass alle monetären Beträge $\upsilon_i$ in einer Verarbeitungs-Operation innerhalb eines Wertebereichs von $[0, ..., n]$ liegen, ohne der Überwachungsinstanz 11 dabei die monetären Beträge $\upsilon_i$ mitzuteilen. Diese Bereichsnachweise werden auch "Range-Proofs" genannt. Als Bereichsnachweise werden bevorzugt Ringsignaturen (engl. ring signature) verwendet. Für das vorliegende Ausführungsbeispiel werden sowohl der monetäre Wert als auch der Verschleierungsbetrag eines elektronischen Münzdatensatzes in Bitdarstellung aufgelöst, d.h. $\upsilon_i = \sum a_j \ast 2^j$ für $0 \leq j \leq n$ und $a_j$ "element" $\{0; 1\}$ sowie $r_i = \sum b_j \ast 2^j$ für $0 \leq j \leq n$ und $b_j$ "element" $\{0; 1\}$. Für jedes Bit wird vorzugsweise eine Ringsignatur mit $C_{i,j} = a_j \cdot H + b_j \cdot G$ und $C_{i,j} - a_j \cdot H$ durchgeführt, wobei in einer Ausgestaltung vorgesehen sein kann, nur für bestimmte Bits eine Ringsignatur durchzuführen.

In Fig. 5 wird ein elektronischer Münzdatensatz $C_i$ von der Herausgeberinstanz 10 erzeugt und mittels der Gleichung (3) ein maskierter elektronischer Münzdatensatz $Z_i$ von der Herausgeberinstanz 10 errechnet und dieser in der Überwachungsinstanz 11 registriert. Im Anschluss überträgt das erste Endgerät M1, das den elektronischen Münzdatensatz $C_i$ an eine zweite Karte K2 übertragen kann oder einen der Verarbeitungs-Schritte (Umschalten, Verbinden, Aufteilen) ausführen kann. Die Übertragung erfolgt beispielsweise drahtlos über WLAN, NFC oder Bluetooth. Die Übertragung kann durch kryptografische Verschlüsselungsverfahren zusätzlich abgesichert sein, indem beispielsweise ein Sitzungsschlüssel ausgehandelt wird oder eine PKI-Infrastruktur angewendet wird.

In der zweiten Karte K2 wird der übertragene elektronische Münzdatensatz $C_i$ als $C_i^*$ erhalten. Mit dem Erhalt des elektronischen Münzdatensatzes $C_i^*$ ist die zweite Karte K2 im Besitz des digitalen Geldes, den der elektronische Münzdatensatz $C_i^*$ repräsentiert. Wenn sich beide Karten K1, K2 gegenseitig vertrauen, sind keine weiteren Schritte notwendig, um das Verfahren zu beenden. Allerdings ist der zweiten Karte K2 nicht bekannt, ob der elektronische Münzdatensatz $C_i^*$ tatsächlich gültig ist. Zudem könnte die erste Karte K1 den elektronischen Münzdatensatz $C_i$ auch noch an eine dritte Karte (nicht dargestellt) übertragen. Um dies zu verhindern sind weitere bevorzugte Schritte im Verfahren vorgesehen.

Zum Prüfen der Validität des erhaltenen elektronischen Münzdatensatzes $C_i^*$ wird in der zweiten Karte K2 mit der - öffentlichen - Einwegfunktion aus Gleichung (3) der maskierte übertragene elektronische Münzdatensatz $Z_i^*$ errechnet. Der maskierte übertragene elektronische Münzdatensatz $Z_i^*$ wird dann an die Überwachungsinstanz 11 übertragen und dort gesucht. Bei Übereinstimmung mit einem registrierten und gültigen maskierten elektronischen Münzdatensatz wird der zweiten Karte K2 die Validität des erhaltenen Münzdatensatzes $C_i^*$ angezeigt und es gilt, dass der erhaltene elektronische Münzdatensatz $C_i^*$ gleich dem registrierten elektronischen Münzdatensatz $C_i$ ist. Mit der Prüfung auf Validität kann in einer Ausgestaltung festgestellt werden, dass der erhaltene elektronische Münzdatensatz $C_i^*$ noch gültig ist, d.h., dass er nicht bereits durch einen anderen Verarbeitungsschritt oder bei einer anderen Transaktion bereits verwendet wurde und/ oder einer weiteren Veränderung unterworfen war.

Bevorzugt findet danach ein Umschalten des erhaltenen elektronischen Münzdatensatzes statt.

Es gilt für das Verfahren, dass die alleinige Kenntnis eines maskierten elektronischen Münzdatensatzes $Z_i$ nicht dazu berechtigt, das digitale Geld auszugeben. Die alleinige Kenntnis des elektronischen Münzdatensatzes $C_i$ berechtigt aber zum Bezahlen, d.h. eine Transaktion erfolgreich durchzuführen, insbesondere wenn der Münzdatensatz $C_i$ gültig ist. Es herrscht eine 1-zu-1 Beziehung zwischen den elektronischen Münzdatensätzen $C_i$ und den entsprechenden maskierten elektronischen Münzdatensätzen $Z_i$. Die maskierten elektronischen Münzdatensätze $Z_i$ werden in der Überwachungsinstanz 11, beispielsweise einer öffentlichen dezentralen Datenbank, registriert. Durch dieses Registrieren wird zunächst die Gültigkeit des Datensatzes prüfbar, beispielsweise ob neue monetäre Beträge (illegaler Weise) erschaffen wurden.

Ein Hauptunterscheidungsmerkmal gegenüber konventionellen Lösungen ist, dass die maskierten elektronischen Münzdatensätze $Z_i$ in einer Buchhaltungsschicht 13 gespeichert werden und alle Verarbeitungen an dem elektronischen Münzdatensatz $Z_i$ dort registriert werden, wohingegen die tatsächliche Übertragung des digitalen Geldes in einer (geheimen, d.h. einer der Öffentlichkeit nicht bekannten) Direkttransaktionsschicht 12 erfolgt.

Um ein mehrfaches Ausgeben zu verhindern oder um ein flexibleres Übertragen zu gewährleisten, können die elektronischen Münzdatensätze nunmehr im Verfahren verarbeitet werden. In der nachfolgenden Tabelle 1 sind die einzelnen Operationen aufgelistet, wobei mit dem angegebenen Befehl auch ein entsprechender Verarbeitungsschritt ausgeführt wird:

*Tabelle 1 - Anzahl von Operationen, die pro Verarbeitung eines Münzdatensatzes in der Karte bzw. Herausgeberinstanz durchzuführen sind*

| Befehl bzw. Schritt | Signatur erstellen | Zufallszahl erstellen | Maskierung erstellen | Bereichsnachweis erstellen |
|---|---|---|---|---|
| Erzeugen | 1 | 1 | 1 | 0 oder 1 |
| Deaktivieren | 1 | 0 | 1 | 0 oder 1 |
| Aufteilen | 0 | 1 | 3 | 0 oder 1 |
| Verbinden | 0 | 0 | 3 | 1 |
| Umschalten | 0 | 1 | 2 | 1 |

Weitere Operationen, die in Tabelle 1 nicht aufgeführt sind, könnten benötigt werden. Anstelle der angeführten Implementierung sind andere Umsetzungen denkbar, die andere Operationen implizieren. Die obige Tabelle 1 zeigt, dass für jeden elektronischen Münzdatensatz, jede der Verarbeitungen "Erstellen", "Deaktivieren", "Aufteilen", "Verbinden" und "Umschalten" verschiedene Operationen "Signatur erstellen"; "Zufallszahl erstellen"; "Maskierung erstellen"; "Bereichsprüfung" vorgesehen sein können, wobei jede der Verarbeitungs-Operation in der Überwachungsinstanz 11 registriert und dort in unveränderlicher Form an eine Liste vorheriger Verarbeitungs-Operationen für maskierte elektronische Münzdatensätze $Z_i$ angehängt wird. Die Operationen der Verarbeitungen "Erstellen" und "Deaktivieren" eines elektronischen Münzdatensatzes werden nur an sicheren Orten und/ oder nur von ausgewählten Instanzen, beispielsweise der Herausgeberinstanz 1, ausgeführt, während die Operationen aller übrigen Verarbeitungen auf den Karten K1, K2 ausgeführt werden können.

Die Anzahl der Operationen für die einzelnen Verarbeitungen ist in der Tabelle 1 mit "0", "1" oder "2" gekennzeichnet. Die Anzahl "0" zeigt dabei an, dass das Endgerät bzw. die Herausgeberinstanz 1 diese Operation für diese Verarbeitung des elektronischen Münzdatensatzes nicht durchführen muss. Die Anzahl "1" zeigt dabei an, dass das Endgerät bzw. die Herausgeberinstanz 10 diese Operation für diese Verarbeitung des elektronischen Münzdatensatzes einmal durchführen können muss. Die Anzahl "2" zeigt dabei an, dass Karte K bzw. die Herausgeberinstanz 10 diese Operation zweimal für diese Verarbeitung des elektronischen Münzdatensatzes durchführen können muss.

Grundsätzlich kann in einer Ausgestaltung auch vorgesehen sein, dass eine Bereichsprüfung durch die Herausgeberinstanz 1 auch beim Erzeugen und/ oder Deaktivieren durchgeführt wird. In der nachfolgenden Tabelle 2 sind für die einzelnen Verarbeitungen die für die Überwachungsinstanz 2 benötigten Operationen aufgelistet:

*Tabelle 2 - Anzahl von Operationen, die pro Verarbeitung eines Münzdatensatzes in der Überwachungsinstanz durchzuführen sind*

| Befehl bzw. Schritt | Signatur vom Herausgeber prüfen | Gültigkeit des maskierten elektronischen Münzdatensatzes prüfen | Bereichsnachweis nachvollziehen | homomorphe Eigenschaften der maskierten elektronischen Münzdatensätze nachvollziehen, d.h. Addieren |
|---|---|---|---|---|
| Erzeugen | 1 | 0 | 0 oder 1 | 0 |
| Deaktivieren | 1 | 1 | 0 oder 1 | 0 |
| Aufteilen | 0 | 1 | 2 oder mehr | 1 |
| Verbinden | 0 | 2 oder mehr | 1 | 1 |
| Umschalten | 0 | 1 | 1 | 0 |

Weitere Operationen, die in Tabelle 2 nicht aufgeführt sind, könnten benötigt werden. Anstelle der angeführten Implementierung sind andere Umsetzungen denkbar, die andere Operationen implizieren. Alle Operationen der Tabelle 2 können in der Überwachungsinstanz 11 durchgeführt werden, die als vertrauenswürdige Instanz, beispielsweise als dezentraler Server, insbesondere Distributed-Trusted-Server, für eine ausreichende Integrität der elektronischen Münzdatensätze sorgt.

Die Tabelle 3 zeigt die für die Systemteilnehmer im Bezahlsystem der Fig. 1 bevorzugt zu installierenden Komponenten:

*Tabelle 3 - Bevorzugte Einheiten in den Systemkomponenten*

| Befehl bzw. Schritt | Herausgeber -instanz 11 | Karte | Überwachungsinst anz |
|---|---|---|---|
| Zufallszahlgenerator (hohe Sicherheit) | Ja | - | - |
| Zufallsgenerator (deterministisch) | - | Ja | - |
| PKI zum Signieren | Ja | - | - |
| PKI zur Signaturprüfung | - | (Ja) | Ja |
| Lesezugriff auf DLT | Ja | Ja | Ja |
| Schreibzugriff auf DLT | Ja | Ja | Ja |
| Deaktivieren des elektronischen Münzdatensatzes | Ja | Ja | - |
| Transportverschlüsselung | Ja | Ja | - |
| Sicherer Speicher | (Ja) | Ja | -/Ja |
| Maskierungs-Einheit | Ja | Ja | - |
| Bereichsnachweis | - | Ja | - |
| Bereichsnachweis prüfen | - | - | Ja |

## EP 4 037 910 B1

(fortgesetzt)

| Befehl bzw. Schritt | Herausgeber -instanz 11 | Karte | Überwachungsinst anz |
|---|---|---|---|
| DLT Software | - | - | Ja |

Tabelle 3 zeigt eine Übersicht über die bevorzugt zu verwendenden Komponenten in jedem Systemteilnehmer, also der Herausgeberinstanz 10, einer Karte K1 und der Überwachungsinstanz 11. Die Karte K1 kann als ein Wallet für elektronische Münzdatensätze, d.h. als elektronische Geldbörse, also ein Datenspeicher der Karte oder eines Endgeräts mit der die Karte betriebsbereit ist und in dem eine Vielzahl von Münzdatensätzen hinterlegt sein können, ausgebildet sein und beispielsweise in Form einer Applikation auf der Karte K oder IT-System eines Händlers, einer Geschäftsbank oder eines anderen Marktteilnehmers implementiert sein und einen elektronischen Münzdatensatz senden oder empfangen. Somit sind die Komponenten in der Karte, so wie sie in Tabelle 3 gezeigt sind, als Software implementiert. Es wird davon ausgegangen, dass die Überwachungsinstanz 11 auf einer DLT basiert und von einer Reihe vertrauenswürdiger Marktteilnehmer betrieben wird.

In Fig. 6 ist das in Fig. 4 gezeigte Banknotensubstrat 2, 4, 6 in eine Karte K einlaminiert. Es ist zu erkennen, dass das Banknotensubstrat 2, 4, 6 in seinen finalen Abmessungen kleiner ist als die Abmessungen der Karte K. Die Karte K ist im Kartenformat ID-1 ausgebildet. Andere Kartenformate sind ebenfalls denkbar.

Im Rahmen der Erfindung können alle beschriebenen und/oder gezeichneten und/oder beanspruchten Elemente beliebig miteinander kombiniert werden.

BEZUGSZEICHENLISTE

| | |
|---|---|
| 1, 5 | Laminier-Schicht |
| 2, 4, 6 | Banknotensubstrat, papierartige Schicht |
| 3 | Folienschicht |
| 7 | sichtbares Merkmal |
| 7a | Sicherheitsmerkmal |
| 8 | sichtbare Daten |
| 9 | Recheneinheit |
| 10 | Herausgeberinstanz |
| 11 | Überwachungsinstanz |
| 12 | Direkttransaktionsschicht |
| 13 | Buchhaltungsschicht |
| $C_i$, $C_i^*$ | Digitale Währungseinheit, elektronischer Münzdatensatz |
| $Z_i$, $Z_i^*$ | Maskierter elektronischer Münzdatensatz |
| K1, K2 | Karte |

**Patentansprüche**

1.  Eine Karte (K), insbesondere Chipkarte, mit:

    - einer Recheneinheit (9) zur Verwaltung von elektronischen Münzdatensätzen ($C_i$), wobei die elektronischen Münzdatensätze ($C_i$) von einer zentralen Instanz (11) ausgegeben werden,
    - einem Kartenkörper mit sichtbaren Daten (8) und zumindest einem sichtbaren Merkmal (7, 7a);

    **dadurch gekennzeichnet, dass**

    - die zentrale Instanz (11) zugleich Herausgeber einer Banknotenserie ist; und
    - das zumindest eine sichtbare Merkmal (7, 7a) die Karte (K) für einen Betrachter als Teil der Banknotenserie ausweist.

2.  Die Karte (K) nach Anspruch 1, wobei eine Banknotenserie eine Serie von Banknoten unterschiedlicher Grundwerte ist; und/oder die sichtbaren Daten (8) eine Zahl, Buchstaben, Text und/oder sonstige Zeichen, wie ein Sonderzeichen oder ein Währungszeichen, umfassen.

3. Die Karte (K) nach einem der vorhergehenden Ansprüche, wobei das zumindest eine sichtbare Merkmal (7, 7a) ein Serienmerkmal ist und das Serienmerkmal

- ein in der Banknotenserie durchgehend verwendetes technisch einheitliches Merkmal; und/oder
- ein in der Banknotenserie durchgehend verwendetes optisch einheitliches Merkmal; und/oder
- eine in der Banknotenserie durchgehend verwendete Metainformation; und/oder
- ein in der Banknotenserie durchgehend verwendetes Muster ist.

4. Die Karte (K) nach einem der vorhergehenden Ansprüche, wobei das zumindest eine sichtbare Merkmal ein eigenständiges Serienmerkmal für die Karte (K) ist oder aus einer Sammlung bestehender Serienmerkmale aus der Banknotenserie ist.

5. Die Karte (K) nach einem der vorhergehenden Ansprüche, wobei der Kartenkörper mehrschichtig ausgebildet ist und wobei das zumindest eine sichtbare Merkmal auf oder in einer innenliegende Schicht des Kartenkörpers angeordnet sind.

6. Die Karte (K) nach Anspruch 5, wobei ein Sicherheitselement als sichtbares Merkmal (7, 7a) auf oder in der innenliegenden Schicht (2, 4, 6) angeordnet ist.

7. Die Karte nach einem der vorhergehenden Ansprüche, wobei der Kartenkörper mehrschichtig ausgebildet ist und eine innenliegende Schicht (2, 4, 6) des Kartenkörpers eine Banknote ist.

8. Die Karte (K) nach Anspruch 7, wobei die Banknote das Format eines Kartenformats aufweist, oder ein Format kleiner als das Kartenformat aufweist.

9. Die Karte (K) nach einem der vorhergehenden Ansprüche, wobei ein Karteninhaber der Karte (K) bei der zentralen Instanz (11) anonym oder pseudonym ist.

10. Die Karte (K) nach einem der Ansprüche 1 bis 8, wobei ein Karteninhaber der Karte (K) bei der zentralen Instanz (11) bekannt ist.

11. Die Karte (K) nach einem der vorhergehenden Ansprüche, wobei ein Herausgeber der Karte (K) eine Geschäftsbank ist.

12. Die Karte (K) nach einem der vorhergehenden Ansprüche, wobei die Karte (K) eine elektronische Anzeigeeinheit, insbesondere zum Anzeigen der geldwerten Beträge der elektronischen Münzdatensätzen ($C_i$), aufweist.

13. Die Karte (K) nach einem der vorhergehenden Ansprüche, wobei die Karte (K) eine Eingabeeinheit für Benutzereingaben, insbesondere zur Steuerung der Verwaltung der elektronischen Münzdatensätze ($C_i$), und/oder eine Schnittstelleneinheit aufweist.

14. Verfahren zur Herstellung einer Karte (K) nach einem der vorherigen Ansprüche mit den Verfahrensschritten:

- Bereitstellen eines Kartenkörpers mit sichtbaren Daten (8) und zumindest einem sichtbaren Merkmal (7, 7a); und
- Herausgeben der Karte durch eine Geschäftsbank oder durch eine zentrale Instanz (11), wobei die zentrale Instanz zugleich Herausgeber einer Banknotenserie ist und wobei das zumindest eine sichtbare Merkmal (7, 7a) die Karte (K) für einen Betrachter als Teil der Banknotenserie ausweist.

15. Verfahren zur Herstellung einer Karte nach Anspruch 14, wobei der Kartenkörper mehrschichtig aufgebaut ist und die einzelnen Schichten passergenau übereinander angeordnet sind und mittels Druck und Temperatur verbunden werden.

**Claims**

1. A card (K), in particular a chip card, comprising:

- a computing unit (9) for managing electronic coin data records ($C_i$), said electronic coin data records ($C_i$) being issued by a central entity (11),
- a card body with visible data (8) and at least one visible feature (7, 7a);

**characterized in that**

- said central entity (11) is also the issuer of a series of banknotes; and
- said at least one visible feature (7, 7a) identifies said card (K) as part of said series of banknotes to an observer.

2. The card (K) of claim 1, wherein a series of banknotes is a series of banknotes of different denominations; and/or said visible data (8) include a number, letters, text and/or other characters, such as a special character or a currency symbol.

3. The card (K) according to one of the preceding claims, wherein said at least one visible feature (7, 7a) is a series feature and said series feature is

- a technically uniform feature used throughout said series of banknotes; and/or
- an optically uniform feature used throughout said series of banknotes; and/or
- a piece of meta-information used throughout said series of banknotes; and/or
- a pattern used throughout said series of banknotes.

4. The card (K) according to one of the preceding claims, wherein said at least one visible feature is an independent series feature for said card (K) or is from a collection of existing series features from said series of banknotes.

5. The card (K) according to one of the preceding claims, wherein said card body is multi-layered and wherein said at least one visible feature is arranged on or in an inner layer of said card body.

6. The card (K) according to claim 5, wherein a security element is arranged as a visible feature (7, 7a) on or in said inner layer (2, 4, 6).

7. The card according to one of the preceding claims, wherein said card body is multi-layered and an inner layer (2, 4, 6) of said card body is a banknote.

8. The card (K) according to claim 7, wherein said banknote has the format of a card format or has a format smaller than the card format.

9. The card (K) according to one of the preceding claims, wherein a cardholder of said card (K) is anonymous or pseudonymous at said central entity (11).

10. The card (K) according to one of claims 1 to 8, wherein a cardholder of said card (K) is known to said central entity (11).

11. The card (K) according to one of the preceding claims, wherein an issuer of said card (K) is a commercial bank.

12. The card (K) according to one of the preceding claims, wherein said card (K) includes an electronic display unit, in particular for displaying the monetary amounts of the electronic coin data records ($C_i$).

13. The card (K) according to one of the preceding claims, wherein said card (K) includes an input unit for user inputs, in particular for controlling the management of the electronic coin data records ($C_i$), and/or an interface unit.

14. A method for producing a card (K) according to one of the preceding claims, comprising the method steps of:

- providing a card body with visible data (8) and at least one visible feature (7, 7a); and
- issuing the card by a commercial bank or by a central entity (11), wherein the central entity is also the issuer of a series of banknotes and wherein said at least one visible feature (7, 7a) identifies said card (K) as part of said series of banknotes to an observer.

15. The method for producing a card according to claim 14, wherein said card body is multi-layered and the individual layers are arranged in register one above the other and are joined by means of pressure and temperature.

**Revendications**

1.  Carte (K), en particulier une carte à puce, comportant :

    - une unité de calcul (9) pour gérer des enregistrements électroniques de données de pièces de monnaie ($C_i$), dans laquelle les enregistrements électroniques de données de pièces de monnaie ($C_i$) sont émis par une instance centrale (11),
    - un corps de carte avec des données visibles (8) et au moins une caractéristique visible (7, 7a) ;

    **caractérisée en ce que**

    - l'instance centrale (11) est également l'émetteur d'une série de billets de banque ; et
    - pour un observateur, la au moins une caractéristique visible (7, 7a) identifie la carte (K) en tant que partie de la série de billets de banque.

2.  Carte (K) selon la revendication 1, dans laquelle une série de billets de banque est une série de billets de banque ayant différentes valeurs faciales ; et/ou les données visibles (8) comprennent un nombre, des lettres, du texte et/ou d'autres caractères, tels qu'un caractère spécial ou un symbole monétaire.

3.  Carte (K) selon l'une des revendications précédentes, dans laquelle la au moins une caractéristique visible (7, 7a) est une caractéristique de série et la caractéristique de série est

    - une caractéristique techniquement uniforme utilisée dans toute la série de billets de banque ; et/ou
    - une caractéristique optiquement uniforme utilisée dans toute la série de billets de banque ; et/ou
    - une méta-information utilisée dans toute la série de billets de banque ; et/ou
    - un motif utilisé dans toute la série de billets de banque.

4.  Carte (K) selon l'une des revendications précédentes, dans laquelle la au moins une caractéristique visible est une caractéristique de série indépendante pour la carte (K) ou provient d'une collection de caractéristiques de série existantes de la série de billets de banque.

5.  Carte (K) selon l'une des revendications précédentes, dans laquelle le corps de carte est formé de plusieurs couches et dans laquelle la au moins une caractéristique visible est disposée sur ou dans une couche intérieure du corps de carte.

6.  Carte (K) selon la revendication 5, dans laquelle un élément de sécurité est agencé comme une caractéristique visible (7, 7a) sur ou dans la couche intérieure (2, 4, 6).

7.  Carte selon l'une des revendications précédentes, dans laquelle le corps de carte est formé de plusieurs couches et une couche intérieure (2, 4, 6) du corps de carte est un billet de banque.

8.  Carte (K) selon la revendication 7, dans laquelle le billet de banque a le format d'un format de carte, ou un format plus petit que le format de carte.

9.  Carte (K) selon l'une des revendications précédentes, dans laquelle un détenteur de carte de ladite carte (K) est anonyme ou sous un pseudonyme au niveau de l'instance centrale (11).

10. Carte (K) selon l'une des revendications 1 à 8, dans laquelle un détenteur de carte de ladite carte (K) est connu de l'instance centrale (11).

11. Carte (K) selon l'une des revendications précédentes, dans laquelle un émetteur de la carte (K) est une banque commerciale.

12. Carte (K) selon l'une des revendications précédentes, dans laquelle la carte (K) comporte une unité d'affichage électronique, en particulier pour afficher les montants monétaires des enregistrements électroniques de données de pièces de monnaie ($C_i$).

13. Carte (K) selon l'une des revendications précédentes, dans laquelle la carte (K) comporte une unité d'entrée pour des entrées d'utilisateur, en particulier pour contrôler la gestion des enregistrements électroniques de données de pièces de monnaie ($C_i$), et/ou une unité d'interface.

14. Procédé de fabrication d'une carte (K) selon l'une des revendications précédentes, comportant les étapes de procédé consistant à :

- fournir un corps de carte avec des données visibles (8) et au moins une caractéristique visible (7, 7a) ; et
- émettre la carte par une banque commerciale ou par une instance centrale (11), dans lequel l'instance centrale est également l'émetteur d'une série de billets de banque et dans lequel, pour un observateur, la au moins une caractéristique visible (7, 7a) identifie la carte (K) en tant que partie de la série de billets de banque.

15. Procédé de fabrication d'une carte selon la revendication 14, dans lequel le corps de carte est formé de plusieurs couches et les couches individuelles sont disposées avec précision les unes au-dessus des autres et sont assemblées par une pression et une température.

**Fig. 1**

**Fig. 2**

**Fig. 3**

**Fig. 4**

**Fig. 5**

K

7

7a

8  AB21001XC223

9

8  20

2, 4, 6

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1259383 A1
- EP 2344342 A2
- DE 102019002732 A1
- DE 102019002731 A1
- US 7363265 B2
- EP 0542298 A2

- WO 2018011108 A1
- WO 2016037895 A1
- DE 10243653 A9
- DE 102019002732
- DE 102019002731